# EUROPEAN PATENT APPLICATION

(11) **EP 2 862 796 A1**
(43) Date of publication of application: **22.04.2015**
(21) Application number: 13275251.0
(22) Date of filing: 18.10.2013
(51) Int. Cl.: B64C 1/14, B64D 1/06, B64D 47/08

(54) **Reconfigurable vehicle doors**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A vehicle includes a reconfigurable door (104, 204, 304, 404) having a first surface (106A) and a second surface (106B). There is also an arrangement (112, 116, 117) for configuring the door so that in a first configuration at least part of the first surface is external to the vehicle, and in a second configuration at least part of the second surface is external to the vehicle. The first surface and/or the second surface includes at least one device mounting arrangement (108).

## Description

The present invention relates to reconfigurable vehicle doors.

Vehicles, such as aircraft, often include various devices on their external surfaces. Examples of such items include sensors and cameras. Such externally projecting devices can have disadvantages in terms of reducing aerodynamics and so on.

Further, external real estate on particular types of vehicles may be limited and so it can be difficult to fit several external items.

Embodiments of the present invention are intended to address at least some of the problems discussed above.

According to a first aspect of the present invention there is provided a vehicle including or comprising:
a reconfigurable door having a first surface and a second surface, and
an arrangement for configuring the door so that in a first configuration at least part of the first surface is external to the vehicle, and in a second configuration at least part of the second surface is external to the vehicle,
wherein the first surface and/or the second surface includes at least one device mounting arrangement.

In some embodiments, one of the surfaces may be flat and not include any formation that projects beyond at least part of a surrounding external surface/skin of the vehicle. The surface may be flush/aligned with at least part of a surrounding external surface/skin of the vehicle.

The arrangement for configuring the door may be pivotable. An axis of rotation of the pivotable arrangement for configuring the door may correspond to a main axis of the vehicle.

At least one dimension of the door may correspond to a dimension of the device.

The device may be mechanical, electromechanical or electronic.

The door may be located on an upper, lower, side, or inclined in-between surface of the vehicle.

The vehicle may comprise an aircraft.

The vehicle may further include a control system for controlling the arrangement for configuring the door, wherein the control system also controls at least one door locking device. The control system may further communicate, in use, with a said device mounted on a said mounting arrangement.

In some embodiments, the first surface and the second surface each includes a respective said device mounting arrangement.

According to another aspect of the present invention there is provided a door assembly including or comprising:
a reconfigurable door having a first surface and a second surface, wherein the first surface and/or the second surface includes at least one device mounting arrangement, and
an arrangement for configuring the door so that in a first configuration at least part of the first surface is external to the vehicle, and in a second configuration at least part of the second surface is external to the vehicle.

The door assembly may include further features as described herein.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments.

Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1A is a sectional view of part of an aircraft including a first example reconfigurable door in a first position;
Figure 1B is a sectional view of part of an aircraft including a first example reconfigurable door in a second position;
Figure 2A shows part of the outside of the aircraft including the example door in its first position;
Figure 2B shows part of the outside of the aircraft including the example door in its second position, and
Figure 3 is a sectional view of part of an aircraft including a second example reconfigurable door.

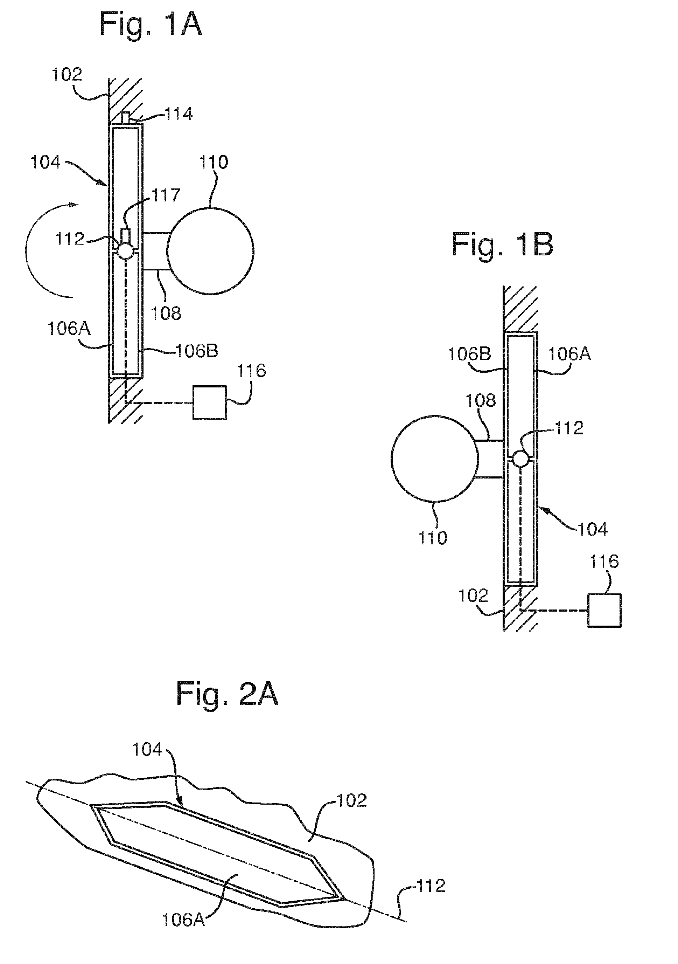

Referring to Figures 1A and 2A initially, the frame of an aircraft (only partially visible) includes an outer surface 102 having an aperture for an example reconfigurable door 104. Although the illustrated examples relate to an aircraft, it will be understood that the invention described herein could be used with land, water or air-based vehicles, e.g. a transporter, ship or helicopter, which may be manned or at least partially autonomous. It will also be understood that the location of the door on the vehicle can vary, e.g. it could be on the top, bottom or side surface, or be inclined between these surfaces. Also, more than one reconfigurable door (which may be of the same or different type) may be positioned on one or more surface of the vehicle.

The example door 104 has a first surface 106A and a second, opposite surface 106B. In the configuration shown in Figures 1A and 2A, the first surface 106A faces outwardly from the aircraft and the second surface 106B faces its interior. The door can be constructed of any suitable material(s), e.g. composite or metal, and it will be understood that the shape/design shown is exemplary only and that the door can be formed of one or more part. The surface 106A can be generally smooth/featureless, thereby improving aerodynamics, fuel consumption, etc, when it is positioned externally to the vehicle, as shown in Figures 1A and 2A, and it is also generally flush/aligned with the surrounding portion of the vehicle outer surface 102.

The second surface 106B of the door 104 includes a mounting arrangement 108 for at least one device 110. The mounting arrangement may be fixed to the second surface by any suitable means, e.g. nuts/bolts, welding, etc. In some embodiments, more than one mounting arrangement (of the same or different types) may be located on a surface of the door. The mounting arrangement can be suitable for holding a sensor, camera or the like and can include any suitable means for attaching the device, e.g. nuts/bolts or releasable inter-engaging formations/clips. In general, the device fitted to the mounting arrangement may be any mechanical, electromechanical, electrical or electronic device, which may or may not be selectively/automatically releasable from the mounting arrangement.

The door 104 is pivotably attached to the airframe about an axis 112. In the example, this axis is generally parallel with the main/longitudinal axis of the aircraft, but this could vary in other embodiments. One or more rigid shafts or the like can form the axis to facilitate rotation of the door, as will be described below. The door can be locked in position using one or more bolts/pins 114, which may be engaged/disengaged automatically by a known locking/unlocking mechanism that can be operated remotely. A control system for controlling the locking/unlocking and positioning of the door is illustrated schematically at 116. The control system can send control signals by any suitable wired or wireless means. It may also control at least one motor or the like that can, in use, cause the door to be rotated about the axis 112. An example motor 117 is shown fitted to the door, but it will be understood that the position of the at least one motor can vary. The aircraft/door assembly can also include further circuitry, or the like, to control/communicate with the device 110 fitted on the mounting arrangement 108. In some cases, this may be integrated into the control system 116.

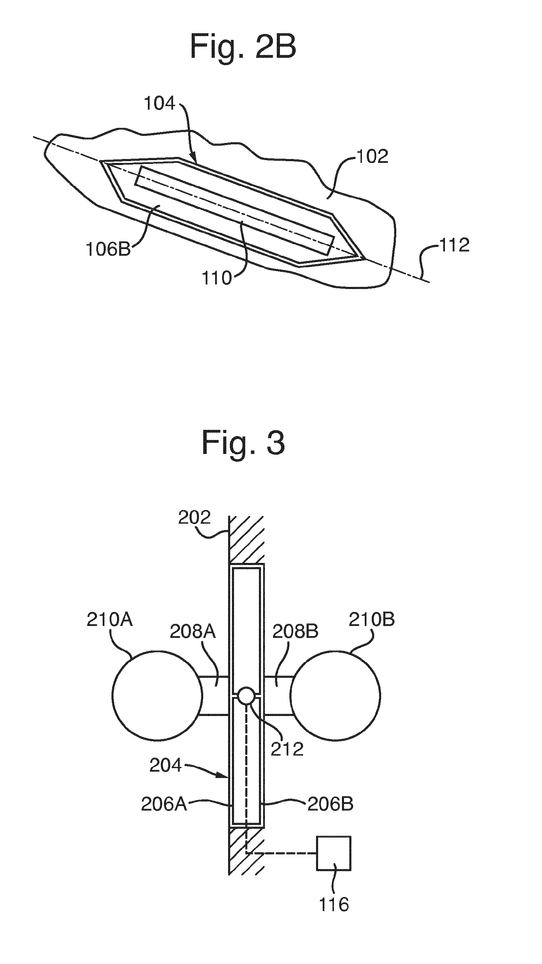

Figures 1 B and 2B show the example door 104 in a second position, after the control system 116 has caused it to rotate through 180° about the axis 112. In practice, the door and aperture will be designed so that the door can be rotated in this way without the mounting arrangement 108 or the mounted device 110 striking a surface of the vehicle. In this position, the second surface 106B faces outwardly from the aircraft and the first surface 106A faces the interior. The second surface of the door can therefore effectively form part of the external surface of the aircraft. The mounting arrangement and attached device are thus positioned outside the aircraft and can be used in an appropriate manner, e.g. taking images or measurements. After the device has been used (or for some other reason), the door can be rotated again (in the same or opposite direction) so that the second surface 106B is positioned back within the aircraft.

In the illustrated example, at least the longitudinal dimension of the door 104 generally corresponds to the length of the device 110. This differs to known aircraft bay doors, which conventionally have significantly larger dimensions than the devices/items that are to pass through them. It will be appreciated that in other embodiments, other/further dimensions of the door may be designed to correspond to those of the device.

Turning to Figure 3, a second example door 204 is illustrated. Items corresponding to those of the embodiments of Figures 1 and 2 have been given the similar reference numerals. The main difference between the door of this embodiment and the one described above is that a second mounting arrangement 208B is fitted to the second surface 206B of the door, with a corresponding device 210B being fitted to that second mounting arrangement. This means that more than one device 210A, 210B can be carried by the vehicle and be used at different times. It will be appreciated that the mounting arrangement/device fitted on the two door surfaces need not be identical and in some cases their position/dimensions could differ.

Although the example doors described herein are shown as having first and second surfaces being reconfigurable by means of rotating about an axis, it will be appreciated that alternative re-positioning techniques may be used. For instance, a door whose length exceeds that of the aperture could be provided, the door having a set of mounting devices spaced apart along its length. Such a door could be slid so that the positions of the mounting devices are aligned with a door aperture in the vehicle's surface (with other parts of the surface possibly including formations/spaces to accommodate the mounting device(s) that is/are not being used at that time). Further movement of the door away/towards the skin/aperture could be used with such an embodiment. Furthermore, the first and second surfaces to which the mounting arrangement(s) are fixed need not be directly opposite one another. In some cases, the door may include more than two surfaces having mounting arrangements. For instance, a door assembly having three or four surfaces (being generally triangular or square shaped, respectively, when viewed from above) could be provided, with the surfaces rotating about an axis that is perpendicular to the longitudinal axis of the vehicle. A moving floor arrangement or the like could be used to position one of the surfaces at/adjacent the door aperture.

## Claims

1. A vehicle including:
a reconfigurable door (104, 204) having a first surface (106A) and a second surface (106B), and
an arrangement (112, 116, 117) for configuring the door so that in a first configuration at least part of the first surface is external to the vehicle, and in a second configuration at least part of the second surface is external to the vehicle,
wherein the first surface and/or the second surface includes at least one device mounting arrangement (108).

2. A vehicle according to claim 1, wherein one of the surfaces (108B) is flat and does not include any formation that projects beyond at least part of a surrounding external skin (102) of the vehicle, when that surface is configured to be external to the vehicle.

3. A vehicle according to claim 1 or 2, wherein at least part of one of the surfaces (108B) is flush/aligned with at least part of a surrounding external skin (102) of the vehicle, when that surface is configured to be external to the vehicle.

4. A vehicle according to any one of the preceding claims, wherein the arrangement (112, 116, 117) for configuring the door (104) is pivotable.

5. A vehicle according to claim 4, wherein an axis of rotation (112) of the pivotable arrangement (112, 116, 117) for configuring the door (104) corresponds to a main axis of the vehicle.

6. A vehicle according to any one of the preceding claims, wherein at least one dimension of the door (104) is designed to correspond to a dimension of the device (110) that, in use, is mounted on a said mounting arrangement (108).

7. A vehicle according to any one of the preceding claims, wherein the device (110) is mechanical, electromechanical or electronic.

8. A vehicle according to any one of the preceding claims, wherein the door (104) is located on an upper, lower, side, or inclined in-between surface of the vehicle.

9. A vehicle according to any one of the preceding claims, including a control system (116) for controlling the arrangement (112, 117) for configuring the door (104), wherein the control system also controls at least one door locking device (114).

10. A vehicle according to claim 9, wherein the control system (116) further communicates, in use, with a said device (110) mounted on a said mounting arrangement (108).

11. A vehicle according to any one of the preceding claims, wherein the first surface (206A) and the second surface (206B) each includes a respective said device mounting arrangement (208A, 208B).

12. A vehicle according to any one of the preceding claims, wherein the vehicle comprises an aircraft.

13. A door assembly including:
a reconfigurable door (104) having a first surface (106A) and a second surface (106B), wherein the first surface and/or the second surface includes at least one device mounting arrangement (108), and
an arrangement (112, 116, 117) for configuring the door so that in a first configuration at least part of the first surface is external to the vehicle, and in a second configuration at least part of the second surface is external to the vehicle.
